# FASCICULE DE BREVET EUROPEEN

(11) **EP 3 368 826 B1**
(45) Date de publication et mention de la délivrance du brevet: **09.09.2020**
(21) Numéro de dépôt: 16809123.9
(22) Date de dépôt: 27.10.2016
(51) Int. Cl.: F23R 3/14, F23R 3/28

(54) **SYSTEME D'INJECTION AERODYNAMIQUE POUR TURBOMACHINE D'AERONEF, A MELANGE AIR/CARBURANT AMELIORE**
AERODYNAMISCHES EINSPRITZSYSTEM FÜR FLUGZEUGTRIEBWERK MIT VERBESSERTER LUFT-KRAFTSTOFF-MISCHUNG
AERODYNAMIC INJECTION SYSTEM FOR AIRCRAFT TURBINE ENGINE, HAVING IMPROVED AIR/FUEL MIXING

(30) Priorité: 29.10.2015 FR 1560358
(43) Date de publication de la demande: 05.09.2018
(73) Titulaire: Safran Aircraft Engines, 75015 Paris (FR)
(72) Inventeur: LEPAROUX, Julien, Marc, Matthieu, 77550 Moissy-Cramayel (FR); MUSAEFENDIC, Haris, 77550 Moissy-Cramayel (FR); EL GNAOUI, Zakaria, 77550 Moissy-Cramayel (FR)
(74) Mandataire: Brevalex
(86) Numéro de dépôt international: PCT/FR2016/052793
(87) Numéro de publication internationale: WO 2017/072451

(56) Documents cités:
- FR-A1- 2 832 493
- FR-A1- 2 919 672
- US-A- 4 425 755

## Description

### DOMAINE TECHNIQUE

La présente invention se rapporte au domaine des chambres de combustion pour turbomachines d'aéronef, de préférence pour des turboréacteurs.

Elle se rapporte plus précisément aux systèmes d'injection aérodynamiques équipant la chambre de combustion, ces systèmes d'injection ayant pour fonction principale de mélanger le carburant délivré par les injecteurs, à l'écoulement d'air. Un tel système est par exemple connu du document FR 2 832 493 A1.

### ETAT DE LA TECHNIQUE ANTERIEURE

Les systèmes d'injection font l'objet de nombreux développements. Leur conception est sans cesse optimisée de façon à améliorer leurs performances en allumage au sol, en rallumage en altitude, ou encore en extinction. Il est également recherché à limiter autant que possible la pollution au ralenti, qui est étroitement liée à la capacité du système d'injection à atomiser et mélanger le carburant injecté avec l'air. De tels systèmes d'injection aérodynamiques sont connus des documents FR 2 875 585, ou encore des documents FR 2 685 452 et FR 2 919 672.

Néanmoins, dans certaines phases de fonctionnement à faible régime, l'atomisation du carburant s'avère souvent insuffisante à cause des faibles débits d'air en présence. Il en découle l'obtention de gouttes de carburant de diamètres élevés, dont l'évaporation est plus longue et plus difficile.

Il existe par conséquent un besoin d'amélioration du processus d'atomisation, afin d'optimiser encore davantage le mélange air-carburant, en particulier à faible régime.

### EXPOSÉ DE L'INVENTION

Pour répondre au moins partiellement à ce besoin, l'invention a tout d'abord pour objet un système d'injection aérodynamique pour chambre de combustion de turbomachine d'aéronef, le système comprenant un corps central creux comportant un premier espace de circulation d'air ainsi qu'une vrille d'introduction d'air permettant à de l'air situé en dehors du corps central creux de pénétrer à l'intérieur du premier espace de circulation d'air, ledit corps creux comportant également un circuit de carburant agencé au moins en partie autour du premier espace, le circuit comprenant un second espace annulaire de circulation d'un film de carburant et des moyens d'alimentation en carburant communiquant avec ledit second espace, les premier et second espaces débouchant dans un troisième espace de mélange d'air et de carburant. Selon l'invention, le système comporte des orifices d'injection de carburant faisant communiquer le circuit de carburant avec ledit premier espace de circulation d'air.

L'invention repose ainsi sur le principe de prélèvement d'une partie du flux de carburant, pour l'injecter directement dans le premier espace au sein duquel circule l'air, dans le but d'obtenir une meilleure atomisation de ce carburant en fines gouttelettes, même à bas régime. L'amélioration de l'atomisation du carburant engendre des effets positifs en termes d'élargissement du domaine d'allumage, d'abaissement de la richesse d'extinction pauvre, d'augmentation du rendement de combustion, de diminution des émissions polluantes, ou encore de diminution d'apparition et de dépôt de coke sur le système d'injection, ce qui permet d'étendre la durée de vie des pièces en présence.

L'invention présente de préférence au moins l'une quelconque des caractéristiques optionnelles suivantes, prises isolément ou en combinaison.

Le corps central est équipé d'une paroi annulaire délimitant intérieurement au moins une partie dudit premier espace de circulation d'air, et délimitant extérieurement, avec un élément extérieur du corps central creux, au moins une partie dudit second espace annulaire de circulation du film de carburant, et les orifices d'injection de carburant traversent ladite paroi annulaire. Alternativement, ces orifices d'injection pourraient être agencés en amont de la paroi annulaire, toujours de façon à déboucher dans le premier espace emprunté par l'air.

Les orifices d'injection de carburant sont répartis en rangées circonférentielles autour d'un axe central du système d'injection, lesdites rangées étant alignées axialement ou disposées en quinconce.

Les orifices d'injection disposent chacun d'un axe de sortie s'inscrivant dans un plan axial du système d'injection, c'est-à-dire sans composante circonférentielle. Alternativement, les orifices d'injection disposent chacun un axe de sortie présentant une composante circonférentielle non nulle, de façon à générer une giration du débit de carburant pénétrant dans ledit premier espace.

De plus, l'axe de sortie de chaque orifice d'injection est incliné de façon à injecter du carburant vers l'aval à l'intérieur dudit premier espace.

La vrille d'introduction d'air comporte des aubes, de préférence inclinées de manière à générer une giration du flux d'air pénétrant dans ledit premier espace.

Lesdits moyens d'alimentation en carburant comprennent une pluralité de conduits, de préférence agencés en alternance avec lesdites aubes de la vrille, selon la direction circonférentielle.

Le système d'injection comporte également un corps extérieur, comprenant de préférence une vrille additionnelle d'introduction d'air.

Enfin, l'invention a également pour objet une turbomachine d'aéronef comprenant un tel système d'injection, la turbomachine étant préférentiellement un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe longitudinale d'un turboréacteur selon l'invention ;
- la figure 2 représente une vue en demi-coupe longitudinale de la chambre de combustion du turboréacteur montré sur la figure précédente ;
- la figure 3 est une vue détaillée en coupe longitudinale de l'un des systèmes d'injection équipant la chambre de combustion montrée sur la figure précédente ;
- la figure 4 est une vue en coupe prise le long de la ligne IV-IV de la figure 3 ;
- la figure 5 est une vue en coupe prise le long de la ligne V-V de la figure 4;
- la figure 6 est une vue agrandie en coupe d'une partie du système d'injection montré sur les figures précédentes, montrant la paroi annulaire du système d'injection équipée de orifices d'injection de carburant ;
- la figure 7 représente une partie de la paroi annulaire, vue depuis l'intérieur de celle-ci et développée dans un plan parallèle à l'axe central du système d'injection ;
- la figure 8 est une vue similaire à celle de la figure 7, avec les orifices d'injection de carburant se trouvant dans une configuration différente.

### EXPOSÉ DÉTAILLÉ DE MODES DE RÉALISATION PRÉFÉRÉS

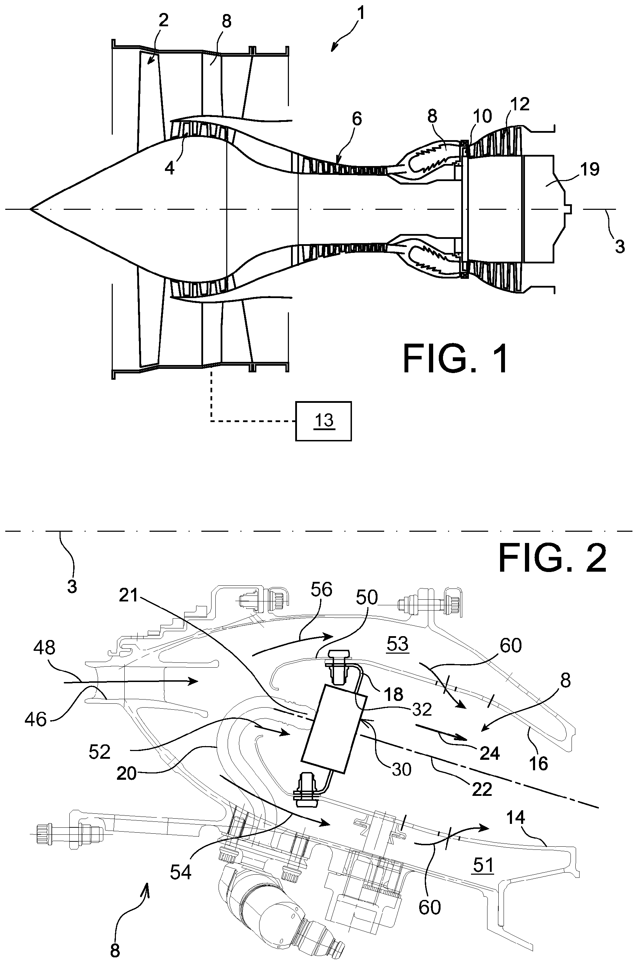

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 1 présente un axe longitudinal 3 autour duquel s'étendent ses différents composants. Elle comprend, d'amont en aval selon une direction principale d'écoulement des gaz à travers cette turbomachine, une soufflante 2, un compresseur basse pression 4, un compresseur haute pression 6, une chambre de combustion 8, une turbine haute pression 10 et une turbine basse pression 12. De manière classique, cette turbomachine 1 est commandée par une unité de commande 13, uniquement représentée schématiquement. Cette unité 13 permet notamment de commander les différents points de fonctionnement de la turbomachine.

Une partie de la chambre de combustion 8 est reproduite de façon plus détaillée sur la figure 2. Elle présente en particulier une virole extérieure 14 centrée sur l'axe 3, une virole intérieure 16 également centrée sur ce même axe, et un fond de chambre 18 reliant les deux viroles à leur extrémité amont. Des injecteurs de carburant 20 sont régulièrement répartis sur le fond de chambre, selon la direction circonférentielle (un seul injecteur étant visible sur la figure 2). Chacun d'eux présente un nez d'injecteur 21, orienté selon un axe principal 22 légèrement incliné par rapport à l'axe 3. A cet égard, il est indiqué que cet axe 22 est parallèle à la direction principale d'écoulement du flux 24 à travers la chambre.

A chaque injecteur 20 est associé un système d'injection 30, représenté schématiquement sur la figure 2. Le système d'injection 30 coopère en amont avec le nez d'injecteur 21, tandis qu'il débouche en aval dans la chambre de combustion 8. Le système d'injection 30 est logé dans une ouverture 32 pratiquée à travers le fond de chambre 18. Ainsi, sur cette chambre, il est prévu plusieurs ouvertures 32 espacées circonférentiellement les unes des autres, et chacune associée à un système d'injection 30 dont l'axe central correspond à l'axe 22.

La chambre de combustion 8, et notamment chaque système d'injection 30, sont alimentés dans la direction de la flèche 48 en air sous pression au niveau du passage 46 montré sur la figure 2, ce passage permettant l'arrivée de l'air sous pression depuis le compresseur haute pression situé plus en amont. Cet air sous pression sert à la combustion et au refroidissement de la chambre de combustion 8. Une partie de cet air est introduit dans la chambre de combustion 8 au niveau de l'ouverture centrale d'un capotage 50, traversé par l'injecteur 20. Une autre partie de l'air s'écoule vers les passages 51, 53 d'écoulement d'air, respectivement selon les directions 54 et 56 puis selon la direction 60. L'écoulement d'air schématisé par les flèches 60 pénètre ensuite dans la chambre de combustion 8 par des orifices primaires et des orifices de dilution et des éléments de refroidissement (multiperforations, films de refroidissement, etc.).

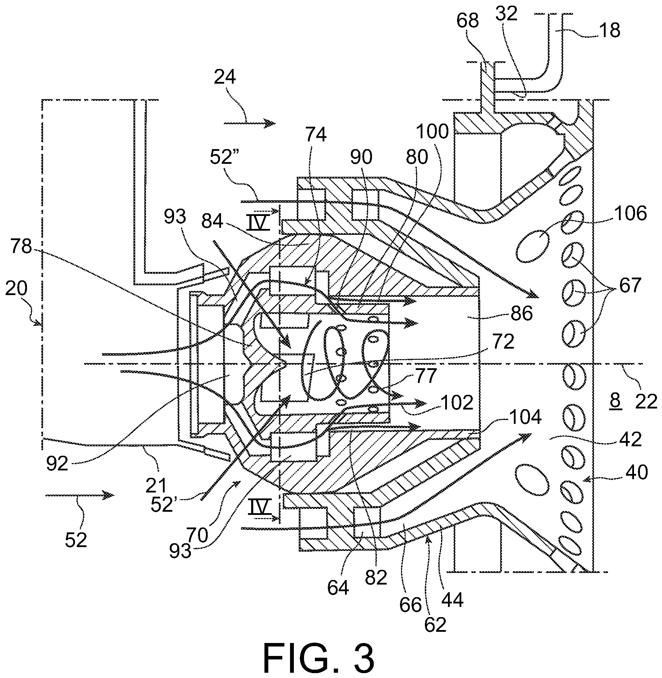

Une partie de l'air provenant de l'écoulement selon les flèches 52 alimente chaque système d'injection 30, dont l'un d'eux va maintenant être décrit plus en détails en référence aux figures 3 à 8.

Le système 30 comporte tout d'abord un corps extérieur 62 équipé d'une vrille d'introduction d'air 64, alimentée en air par une partie 52" du flux 52, et également dénommée vrille externe. Cette vrille 64 est axiale, et débouche dans un canal annulaire 66 délimité extérieurement par un bol aérodynamique 40 équipé d'une première extrémité évasée vers l'aval 42, dite partie divergente. De manière conventionnelle, il est noté que les termes « amont » et « aval » sont à considérer par rapport à la direction principale d'écoulement du flux 24 à travers la chambre 8.

Le bol 40 fait partie intégrante du corps extérieur 62. En amont, le bol comporte une base 44 également centrée sur l'axe 22, comme la partie évasée 42. Cette base 44 se situe dans le continuité aval de la vrille 64.

La partie évasée 42 est équipée d'une rangée annulaire de trous 67 d'introduction d'air dans le foyer de combustion de la chambre 8. Ces trous se situent à proximité d'une bride de fixation 68 permettant de fixer le bol sur le fond de chambre 18, dans l'ouverture associée 32.

Le système d'injection 30 comporte également un corps central creux 70, dont l'extrémité aval est logée à l'intérieur du corps extérieur 62. Ce corps extérieur 70 est réalisé d'une seule pièce, ou bien à l'aide de plusieurs éléments rapportés les uns aux autres comme cela sera détaillé ci-après.

Le corps central 70 comporte un premier espace cylindrique 72 centré sur l'axe 22 du dispositif 30. Ce premier espace 72 est dédié à la circulation d'air provenant du flux 52. Pour ce faire, le corps 70 comporte une vrille d'introduction d'air 74 équipée d'aubes 76, cette vrille étant également dénommée vrille interne. Les aubes sont réparties circonférentiellement autour de l'axe 22. Une partie 52' du flux d'air 52 traverse ces aubes 76 orientées globalement radialement, pour donner lieu à un flux d'air 77 cheminant au sein du premier espace 72. Les aubes 76 peuvent d'ailleurs être inclinées circonférentiellement, de manière à créer une giration du flux d'air 77 selon l'axe 22, c'est-à-dire un flux d'air 77 tourbillonnant.

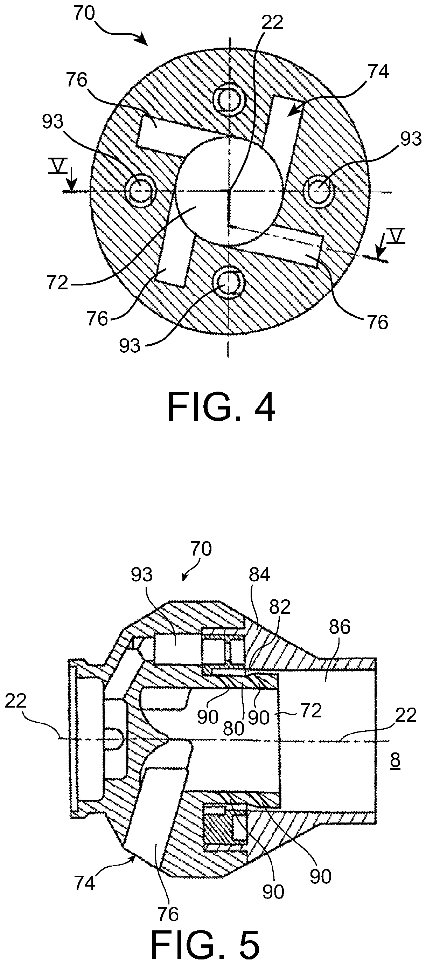

Le premier espace 72 est délimité par un fond amont 78, et reste ouvert vers l'aval. La paroi latérale visant à former l'espace 72 comporte une partie amont au niveau de laquelle débouchent les aubes 76 de la vrille 74, tandis que sa partie aval est constituée par une paroi annulaire 80 centrée sur l'axe 22. Cette paroi annulaire 80 est préférentiellement cylindrique, de section circulaire. Elle délimite donc intérieurement une partie aval du premier espace 72, et délimite extérieurement un second espace annulaire 82 centré sur l'axe 22. Ce second espace annulaire 82 fait partie intégrante d'un circuit de carburant, et est délimité conjointement avec un élément extérieur 84 du corps central, reçu dans le corps extérieur 62. Le second espace 82 se situe autour du premier espace 72. Les premier et second espaces 72, 82 sont délimités vers l'aval par l'extrémité aval de la paroi annulaire 80, à partir de laquelle ces deux espaces 72, 82 débouchent dans un troisième espace 86 pour le mélange d'air et de carburant. Ce troisième espace s'étend jusqu'à l'extrémité aval du corps central 70, puis s'évase ensuite pour se prolonger jusqu'à l'extrémité aval du bol 40. A titre d'exemple et comme cela est le mieux visible sur la figure 5, le corps 70 peut présenter une partie amont réalisée d'une seule pièce ainsi qu'une partie aval rapportée sur la partie amont. La partie aval définit alors le troisième espace 86 ainsi que la partie extérieure du second espace annulaire 82.

Le circuit de carburant comporte également des moyens d'alimentation en carburant situés en amont de l'espace annulaire 82. Ces moyens comportent tout d'abord un distributeur 92 délimité par le fond 78, et formant une cavité alimentée en carburant par le nez d'injecteur 21 avec lequel coopère ce distributeur 92. Ce dernier est agencé à l'extrémité amont du corps central 70. Il est prolongé par une pluralité de conduits de carburant 93 espacés circonférentiellement les uns des autres, et de préférence agencés en alternance avec les aubes 76 de la vrille d'air 74, comme cela est visible sur la figure 4. L'extrémité aval des conduits 93 débouchent dans le second espace annulaire 82 pour l'alimentation en carburant de ce dernier.

L'une des particularités de l'invention réside dans la présence d'orifices d'injection de carburant 90 traversant la paroi annulaire 80. Grâce à ces orifices 90, une partie du carburant cheminant dans le second espace annulaire 82 est dérivée pour être directement intégrée dans le premier espace 72, pour y subir une première phase d'atomisation par le flux d'air 77. L'autre partie du carburant chemine quant à elle normalement sous forme de film jusqu'à l'extrémité aval de la paroi annulaire 80. Alternativement, les orifices d'injection 90 pourraient être agencés encore plus en amont afin d'introduire le carburant au plus tôt dans le premier espace 72. A titre d'exemple indicatif, ces orifices 90 pourraient être prévus au niveau de la sortie des aubes 76, disposés en alternance avec celles-ci selon la direction circonférentielle.

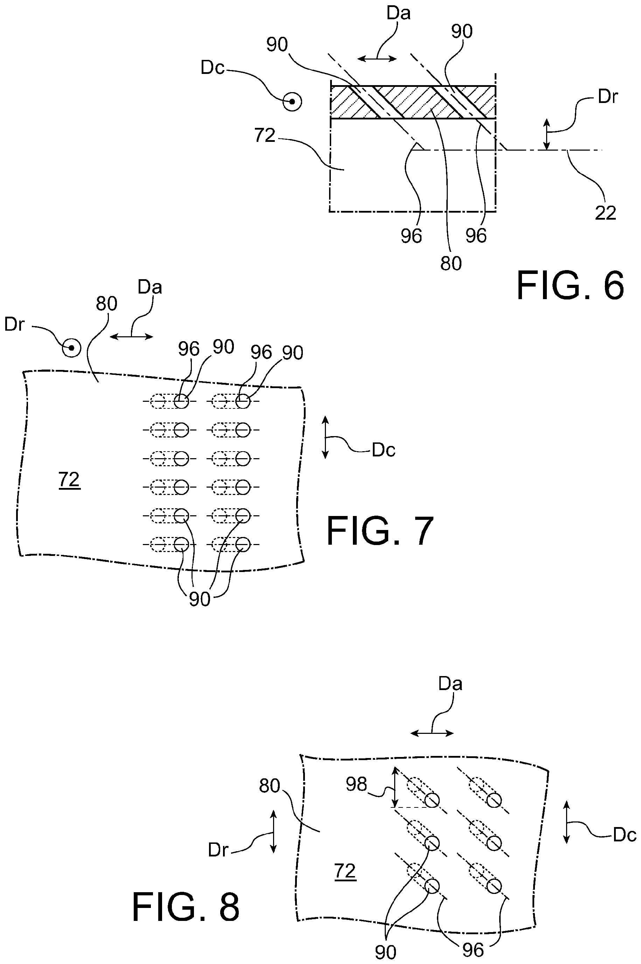

En référence plus particulièrement aux figures 6 et 7, les orifices d'injection 90 sont agencés en rangées circonférentielles centrées sur l'axe 22, ces rangées étant par exemple au nombre de deux ou plus. A cet égard, il est noté que de manière conventionnelle, les directions axiale Da et circonférentielle Dc sont orthogonales à une direction radiale Dr du système d'injection 18. Les rangées d'orifices 90 sont soit alignées axialement selon la direction Da comme visible sur les figures 6 et 7, soit agencées en quinconce en présentant un décalage circonférentiel d'un demi-pas.

A titre d'exemple indicatif, le pas axial selon la direction Da entre deux rangées d'orifices directement consécutives est compris entre 1 et 2,5 mm, et le pas circonférentiel Pc entre deux orifices 90 directement consécutifs d'une même rangée, est compris 2 et 5 mm. En outre, le diamètre de chaque orifice 90 peut être compris entre 0,2 et 0,6 mm, et de préférence être de l'ordre de 0,4 mm.

Sur la réalisation des figures 6 et 7, les axes de sortie 96 des orifices d'injection 90 s'inscrivent dans des plan axiaux du système 30, à savoir des plans fictifs (non représentés) intégrant l'axe central 22. En d'autres termes, ces axes ne présentent pas de composantes circonférentielles selon la direction Dc, de sorte qu'il est obtenu une injection seulement axiale. Cependant, dans leurs plans axiaux respectifs, les axes 96 présentent chacun une inclinaison selon la direction radiale Dr, afin que le carburant puisse être éjecté vers l'aval à l'intérieur du premier espace 72.

Alternativement, comme montré sur la figure 8, les axes de sortie 96 peuvent présenter une composante circonférentielle 98 non nulle afin de générer une giration du carburant autour de l'axe 22 dans le premier espace 72. A cet égard, il est noté que le sens de giration du carburant dans le premier espace 72 peut être identique ou contraire à celui du flux d'air 77, même si un sens contraire est privilégié afin de favoriser l'atomisation du carburant et augmenter le cisaillement de la nappe de carburant.

De retour à la figure 3, il est noté que l'injecteur 20 coopère avec le système d'injection 30 de façon à ce que le carburant emprunte le distributeur 92 puis les conduits 93, pour ensuite se trouver sous forme d'un film 100 cheminant vers l'aval dans le second espace 82, avec une composante tangentielle.

Simultanément, un débit de carburant 102 est prélevé du second espace 82 par les orifices d'injection 90, pour pénétrer dans le premier espace 72 au sein duquel les flux d'air 77 et de carburant 102 se mélangent en vue d'une première phase d'atomisation du carburant. Ce débit de carburant est de préférence introduit dans l'espace 82 avec une composante tangentielle avant d'être mélangé au flux d'air 77.

Le film 100 et le débit prélevé de carburant 102 se rejoignent ensuite dans le troisième espace 86, au sein duquel ils sont d'abord contenus par la surface extérieure 104 de l'élément extérieur 84. En quittant le corps creux 70 du système d'injection, le film 100 et le débit prélevé 102 sont ensuite atomisés par le flux d'air 52" provenant de la vrille 64, générant elle aussi un écoulement tourbillonnaire débouchant dans la partie divergente du bol aérodynamique 40. Cette poursuite du processus d'atomisation du carburant 100, 102 permet d'alimenter la flamme 106, située à l'intérieur de la chambre.

A titre indicatif, il est noté que la conception retenue met donc en œuvre une circulation d'un film de carburant 100 à travers la vrille interne 74 du système d'injection, comme cela est connu de l'art antérieur. Cette conception à injection de film de carburant diffère de l'injection dite « aéromécanique », dans laquelle le carburant est injecté via un orifice pour former un spray conique.

Bien entendu, diverses modifications peuvent être apportées par l'homme du métier à l'invention qui vient d'être décrite, uniquement à titre d'exemples non limitatifs.

## Revendications

1. Système d'injection aérodynamique (30) pour chambre de combustion (8) de turbomachine d'aéronef, le système comprenant un corps central creux (70) comportant un premier espace de circulation d'air (72) ainsi qu'une vrille d'introduction d'air (74) permettant à de l'air situé en dehors du corps central creux de pénétrer à l'intérieur du premier espace de circulation d'air (72), ledit corps creux (70) comportant également un circuit de carburant (92, 93, 82) agencé au moins en partie autour du premier espace (72), le circuit comprenant un second espace annulaire (82) de circulation d'un film de carburant et des moyens d'alimentation en carburant (92, 93) communiquant avec ledit second espace (82), les premier et second espaces (72, 82) débouchant dans un troisième espace (86) de mélange d'air et de carburant,
**caractérisé en ce que** le système comporte des orifices d'injection de carburant (90) faisant communiquer le circuit de carburant avec ledit premier espace de circulation d'air (72).

2. Système d'injection selon la revendication 1, **caractérisé en ce que** le corps central (70) est équipé d'une paroi annulaire (80) délimitant intérieurement au moins une partie dudit premier espace de circulation d'air (72), et délimitant extérieurement, avec un élément extérieur (84) du corps central creux (70), au moins une partie dudit second espace annulaire (82) de circulation du film de carburant, et **en ce que** les orifices d'injection de carburant (90) traversent ladite paroi annulaire (80).

3. Système d'injection selon la revendication 1 ou la revendication 2, **caractérisé en ce que** les orifices d'injection de carburant (90) sont répartis en rangées circonférentielles autour d'un axe central (22) du système d'injection, lesdites rangées étant alignées axialement ou disposées en quinconce.

4. Système d'injection selon l'une quelconque des revendications précédentes, **caractérisé en ce que** les orifices d'injection (90) disposent chacun d'un axe de sortie (90) s'inscrivant dans un plan axial du système d'injection.

5. Système d'injection selon l'une quelconque des revendications 1 à 4, **caractérisé en ce que** les orifices d'injection (90) disposent chacun un axe de sortie (96) présentant une composante circonférentielle (98) non nulle, de façon à générer une giration du débit de carburant pénétrant dans ledit premier espace (72).

6. Système d'injection selon l'une quelconque des revendications précédentes, **caractérisé en ce que** l'axe de sortie (96) de chaque orifice d'injection (90) est incliné de façon à injecter du carburant vers l'aval à l'intérieur dudit premier espace (72).

7. Système d'injection selon l'une quelconque des revendications précédentes, **caractérisé en ce que** la vrille d'introduction d'air (74) comporte des aubes (76), de préférence inclinées de manière à générer une giration du flux d'air pénétrant dans ledit premier espace (72).

8. Système d'injection selon la revendication précédente, **caractérisé en ce que** lesdits moyens d'alimentation en carburant comprennent une pluralité de conduits (93), de préférence agencés en alternance avec lesdites aubes (76) de la vrille (74), selon la direction circonférentielle (Dc).

9. Système d'injection selon l'une quelconque des revendications précédentes, **caractérisé en ce qu'**il comporte également un corps extérieur (62), comprenant de préférence une vrille additionnelle d'introduction d'air (64).

10. Turbomachine (1) d'aéronef comprenant un système d'injection (30) selon l'une quelconque des revendications précédentes.

## Patentansprüche

1. Aerodynamisches Einspritzsystem (30) für eine Brennkammer (8) eines Flugzeugtriebwerks, wobei das System einen zentralen Hohlkörper (70), der einen ersten Luftzirkulationsraum (72) umfasst, sowie einen Verwirbler (74) zur Luftzufuhr umfasst, der ein Eindringen von außerhalb des zentralen Hohlkörpers befindlicher Luft in das Innere des ersten Luftzirkulationsraums (72) ermöglicht, wobei der Hohlkörper (70) darüber hinaus einen Kraftstoffkreislauf (92, 93, 82) umfasst, der zumindest teilweise rund um den ersten Raum (72) angeordnet ist, wobei der Kreislauf einen zweiten ringförmigen Raum (82) zur Zirkulation eines Kraftstofffilms und Mittel (92, 93) zur Kraftstoffzuführung umfasst, die mit dem zweiten Raum (82) in Verbindung stehen, wobei der erste und der zweite Raum (72, 82) in einen dritten Raum (86) zum Mischen von Luft und Kraftstoff münden,
**dadurch gekennzeichnet, dass** das System Kraftstoffeinspritzöffnungen (90) umfasst, die den Kraftstoffkreislauf mit dem ersten Luftzirkulationsraum (72) verbinden.

2. Einspritzsystem gemäß Anspruch 1, **dadurch gekennzeichnet, dass** der zentrale Körper (70) mit einer ringförmigen Wand (80) versehen ist, die intern mindestens einen Teil des ersten Luftzirkulationsraums (72) begrenzt und extern mit einem äußeren Element (84) des zentralen Hohlkörpers (70) mindestens einen Teil des zweiten ringförmigen Raums (82) zur Zirkulation des Kraftstofffilms begrenzt, und dadurch, dass die Kraftstoffeinspritzöffnungen (90) durch die ringförmige Wand (80) verlaufen.

3. Einspritzsystem gemäß Anspruch 1 oder Anspruch 2, **dadurch gekennzeichnet, dass** die Kraftstoffeinspritzöffnungen (90) in umlaufenden Reihen rund um eine Mittelachse (22) des Einspritzsystems verteilt sind, wobei die Reihen axial ausgerichtet oder versetzt angeordnet sind.

4. Einspritzsystem gemäß einem der vorstehenden Ansprüche, **dadurch gekennzeichnet, dass** die Einspritzöffnungen (90) jeweils über eine Ausgangsachse (90) verfügen, die in einer axialen Ebene des Einspritzsystems liegt.

5. Einspritzsystem gemäß einem der Ansprüche 1 bis 4, **dadurch gekennzeichnet, dass** die Einspritzöffnungen (90) jeweils über eine Ausgangsachse (96) verfügen, die eine Umfangskomponente (98) ungleich Null so aufweist, dass eine Rotation der in den ersten Raum (72) eindringenden Kraftstoffmenge erzeugt wird.

6. Einspritzsystem gemäß einem der vorstehenden Ansprüche, **dadurch gekennzeichnet, dass** die Ausgangsachse (96) einer jeden Einspritzöffnung (90) so geneigt ist, dass Kraftstoff stromabwärts in das Innere des ersten Raums (72) eingespritzt wird.

7. Einspritzsystem gemäß einem der vorstehenden Ansprüche, **dadurch gekennzeichnet, dass** der Verwirbler (74) zur Luftzufuhr Schaufeln (76) umfasst, die vorzugsweise so geneigt sind, dass sie eine Rotation des in den ersten Raum (72) eindringenden Luftstroms erzeugen.

8. Einspritzsystem gemäß dem vorstehenden Anspruch, **dadurch gekennzeichnet, dass** die Mittel zur Kraftstoffzuführung mehrere Leitungen (93) umfassen, die in Umfangsrichtung (Dc) vorzugsweise abwechselnd mit den Schaufeln (76) des Verwirblers (74) angeordnet sind.

9. Einspritzsystem gemäß einem der vorstehenden Ansprüche, **dadurch gekennzeichnet, dass** es darüber hinaus einen äußeren Körper (62) umfasst, der vorzugsweise einen zusätzlichen Verwirbler (64) zur Luftzufuhr umfasst.

10. Triebwerk (1) eines Flugzeugs, das ein Einspritzsystem (30) gemäß einem der vorstehenden Ansprüche umfasst.

## Claims

1. An aerodynamic injection system (30) for a combustion chamber (8) of an aircraft turbomachine, the system comprising a hollow central body (70) including a first air circulation space (72) as well as an air introduction swirler (74) enabling air located outside the hollow central body to penetrate inside the first air circulation space (72), said hollow body (70) also including a fuel circuit (92, 93, 82) arranged at least partly about the first space (72), the circuit comprising a second annular space (82) for circulating a fuel film and fuel supply means (92, 93) communicating with said second space (82), the first and second spaces (72, 82) opening into a third space (86) of air-fuel mixture,
**characterised in that** the system includes fuel injection ports (90) communicating the fuel circuit with said first air circulation space (72).

2. The injection system according to claim 1, **characterised in that** the central body (70) is equipped with an annular wall (80) delimiting internally at least one part of said first air circulation space (72), and delimiting externally, with an external element (84) of the hollow central body (70), at least one part of said second annular space (82) for circulating the fuel film, and **in that** the fuel injection ports (90) pass through said annular wall (80).

3. The injection system according to claim 1 or claim 2, **characterised in that** the fuel injection ports (90) are distributed in circumferential rows about a central axis (22) of the injection system, said rows being axially aligned or staggeredly arranged.

4. The injection system according to any of the preceding claims, **characterised in that** the injection ports (90) each have an outlet axis (90) included in an axial plane of the injection system.

5. The injection system according to any of claims 1 to 4, **characterised in that** the injection ports (90) each have an outlet axis (96) having a non-zero circumferential component (98), so as to generate a spinning of the fuel flow rate penetrating said first space (72).

6. The injection system according to any of the preceding claims, **characterised in that** the outlet axis (96) of each injection port (90) is tilted so as to inject fuel downstream inside said first space (72).

7. The injection system according to any of the preceding claims, **characterised in that** the air introduction swirler (74) includes vanes (76), preferably tilted so as to generate a spinning of the air flow penetrating said first space (72).

8. The injection system according to the preceding claim, **characterised in that** said fuel supply means comprise a plurality of ducts (93), preferably arranged alternately with said vanes (76) of the swirler (74), along the circumferential direction (Dc).

9. The injection system according to any of the preceding claims, **characterised in that** it also includes an external body (62), preferably comprising an additional air introduction swirler (64).

10. An aircraft turbomachine (1) comprising an injection system (30) according to any of the preceding claims.
